# EUROPEAN PATENT APPLICATION

(11) **EP 2 693 543 A1**
(43) Date of publication of application: **05.02.2014**
(21) Application number: 12763587.8
(22) Date of filing: 28.03.2012
(51) Int. Cl.: H01M 4/86, H01M 8/10

(54) **GAS DIFFUSION LAYER, ELECTRODE FOR FUEL CELL, MEMBRANE ELECTRODE JUNCTION, AND FUEL CELL**

(30) Priority: 31.03.2011 JP 2011079986
(71) Applicant: JX Nippon Oil & Energy Corporation, Chiyoda-ku, Tokyo 100-8162 (JP)
(72) Inventor: TAKAMI Hirofumi, Tokyo 1008162 (JP)
(74) Representative: Grünecker, Kinkeldey, Stockmair & Schwanhäusser
(86) International application number: PCT/JP2012/058173
(87) International publication number: WO 2012/133545

(57) **Abstract**

A gas diffusion layer comprises a gas diffusion substrate having a first surface and a second surface formed opposite to the first surface; and a microporous layer containing a conductive powder and disposed on the first surface of the gas diffusion substrate and in the gas diffusion substrate, wherein the microporous layer is continuous in a thickness direction of the gas diffusion substrate, an amount of the microporous layer on a cross section perpendicular to the thickness direction is maximum at a first cross-sectional position in the thickness direction and decreases from the first cross-sectional position toward the second surface, an amount of the microporous layer included in a region on the first surface side of a central position of the gas diffusion substrate in the thickness direction is 80% or more of an amount of the entire microporous layer, and the microporous layer extends to the second surface.

## Description

### Technical Field

The present invention relates to a fuel cell that generates power by the electrochemical reaction of hydrogen and oxygen, a gas diffusion layer, a fuel cell electrode, and a membrane electrode assembly.

### Background Art

In recent years, fuel cells in which energy conversion efficiency is high, and no hazardous substances are produced by a power generation reaction have attracted attention. As one of such fuel cells, a polymer electrolyte fuel cell that operates at a low temperature of 100°C or less is known.

The polymer electrolyte fuel cell is an apparatus that has a basic structure in which a solid polymer membrane that is an electrolyte membrane is disposed between an anode and a cathode, supplies a fuel gas containing hydrogen to the anode and an oxidant gas containing oxygen to the cathode, and generates power by the following electrochemical reactions.

Anode: H₂ → 2H⁺ + 2e⁻ (1)

Cathode: 1/2O₂ + 2H⁺ + 2e⁻ → H₂O (2)

The anode and the cathode each comprise a structure in which a catalyst layer and a gas diffusion layer (GDL) are laminated. The catalyst layers of the electrodes are disposed opposed to each other with the solid polymer membrane sandwiched between them, constituting a fuel cell. The catalyst layer is a layer prepared by binding carbon particles supporting a catalyst with an ion exchange resin. The gas diffusion layer is a passage path for the oxidant gas or the fuel gas.

In the anode, hydrogen contained in the supplied fuel is decomposed into hydrogen ions and electrons as shown in the above formula (1). Of these, the hydrogen ions move in the solid polymer electrolyte membrane toward the air electrode, and the electrons move to the air electrode through an external circuit. On the other hand, in the cathode, oxygen contained in the oxidant gas supplied to the cathode reacts with hydrogen ions and electrons that have moved from the fuel electrode, and water is produced as shown in the above formula (2). In this manner, electrons move from the fuel electrode toward the air electrode in the external circuit, and therefore, power is taken out.

For example, a gas diffusion electrode for a fuel cell in which the amount of a water repellent material in a porous substrate changes continuously from the side in contact with a catalyst layer toward the other side is described in Patent Literature 1. In addition, a technique is described in Patent Literature 2 in which in a gas diffusion layer, a fluid on the first surface side of a substrate is inhibited from being excessively impregnated in the thickness direction of the substrate by putting a half or more of the second surface of the substrate in a state not in contact with a support or allowing the support surface of the support to have water repellency.

### Citation List

### Patent Literature

Patent Literature 1: Japanese Patent Application Laid-Open No. 2003-109604
Patent Literature 2: Japanese Patent Application Laid-Open No. 2009-181718

### Summary of Invention

### Technical Problem

In a fuel cell, it is necessary to achieve both the discharge of water produced by an electrochemical reaction and gas diffusivity in a gas diffusion layer. But, a problem of conventional fuel cells is that the ensuring of a discharge path for water in a gas diffusion layer is not sufficient, and both water discharge properties and gas diffusivity cannot be achieved in the gas diffusion layer.

For example, in the fuel cells in the cited literatures 1 and 2, a carbon path that is formed in the gas diffusion layer and is a discharge path for produced water produced by an electrochemical reaction cannot be quantitatively grasped.

The present invention has been made in view of such a problem, and it is an object of the present invention to provide a gas diffusion layer, a fuel cell electrode, a membrane electrode assembly, and a fuel cell that can achieve both water discharge properties and gas diffusivity and improve voltage characteristics.

### Solution to Problem

In order to solve the above problem, a gas diffusion layer according to one aspect of the present invention comprises a gas diffusion substrate having a first surface and a second surface formed opposite to the first surface; and a microporous layer containing a conductive powder and disposed on the first surface of the gas diffusion substrate and in the gas diffusion substrate, wherein the microporous layer is continuous in a thickness direction of the gas diffusion substrate, an amount of the microporous layer on a cross section perpendicular to the thickness direction is maximum at a first cross-sectional position in the thickness direction and decreases from the first cross-sectional position toward the second surface, an amount of the microporous layer included in a region on the first surface side of a central position of the gas diffusion substrate in the thickness direction is 80% or more of an amount of the entire microporous layer, and the microporous layer extends to the second surface.

In the gas diffusion layer according to one aspect of the present invention, the microporous layer is continuous in a thickness direction of the gas diffusion substrate. The microporous layer constitutes a discharge path for produced water, and therefore, a discharge path continuous in the thickness direction is maintained in the gas diffusion layer, and thus, the discharge of produced water is efficiently performed. In addition, an amount of the microporous layer on a cross section perpendicular to the thickness direction is maximum at a first cross-sectional position in the thickness direction and decreases from the first cross-sectional position toward the second surface. Thus, a structure in which water accumulation is not caused in the middle of the discharge path for produced water can be provided. In addition, an amount of the microporous layer included in a region on the first surface side of a central position of the gas diffusion substrate in the thickness direction is 80% or more of an amount of the entire microporous layer. By sufficiently ensuring the amount of the microporous layer in a region that is on the side of the interface between the catalyst layer and the microporous layer in this manner, high produced water extraction ability from the interface can be exhibited. In addition, the microporous layer extends to the second surface, and thus, the microporous layer is continuous from the first surface to the second surface in the gas diffusion substrate, and the discharge path for produced water can be ensured to gas flow paths. By the above, while gas diffusivity is maintained, water produced by an electrochemical reaction can be efficiently discharged. Thus, it is possible to achieve both water discharge properties and gas diffusivity as a fuel cell and improve voltage characteristics.

In addition, in the gas diffusion layer according to one aspect of the present invention, a curve obtained by plotting the amount of the microporous layer on the cross section with respect to a cross-sectional position of the cross section in the thickness direction has no local minimum point between the first cross-sectional position and the second surface. Thus, the amount of the microporous layer decreases from the first cross-sectional position toward the second surface, and a structure in which water accumulation is not caused in the middle of the discharge path for produced water can be provided.

In addition, in the gas diffusion layer according to one aspect of the present invention, when a curve obtained by plotting the amount of the microporous layer on the cross section with respect to a cross-sectional position of the cross section in the thickness direction has a local minimum point between the first cross-sectional position and the second surface, a difference between a maximum value on the second surface side of the local minimum point and a value at the local minimum point is 5% or less of a value at the first cross-sectional position. Thus, the amount of the microporous layer decreases from the first cross-sectional position toward the second surface, and a structure in which water accumulation is not caused in the middle of the discharge path for produced water can be provided.

In addition, in the gas diffusion layer according to one aspect of the present invention, the curve obtained by plotting the amount of the microporous layer on the cross section with respect to the cross-sectional position of the cross section in the thickness direction has no local minimum point on the first surface side of the first cross-sectional position. Thus, the amount of the microporous layer increases from the first surface side toward the first cross-sectional position on the first surface side of the first cross-sectional position, and a structure in which water accumulation is not caused in the middle of the discharge path for produced water can be provided.

A fuel cell electrode according to one aspect of the present invention comprises the above-described gas diffusion layer and a catalyst layer. Thus, it is possible to achieve both water discharge properties and gas diffusivity as a fuel cell and improve voltage characteristics.

A membrane electrode assembly according to one aspect of the present invention comprises an electrolyte membrane; an anode provided on one surface of the electrolyte membrane; and a cathode provided on the other surface of the electrolyte membrane, wherein the above-described gas diffusion layer is used in at least one of the anode and the cathode. By using the above-described gas diffusion layer in the cathode, the discharge properties of water produced in the cathode catalyst layer can be improved. In addition, by using the above-described gas diffusion layer in the anode, the discharge properties of water back-diffused into the anode from the cathode through the electrolyte membrane can be improved. The back diffusion is a phenomenon in which water moves from the cathode to the anode due to the water concentration gradient between the anode and the cathode. Thus, it is possible to achieve both water discharge properties and gas diffusivity as a fuel cell and improve voltage characteristics.

A fuel cell according to one aspect of the present invention comprises the above-described gas diffusion layer. Thus, it is possible to achieve both water discharge properties and gas diffusivity as a fuel cell and improve voltage characteristics.

### Advantageous Effects of Invention

According to the present invention, it is possible to achieve both water discharge properties and gas diffusivity as a fuel cell and improve voltage characteristics.

### Brief Description of Drawings

[Figure 1] Figure 1 is a perspective view schematically showing the structure of a fuel cell according to an embodiment.
[Figure 2] Figure 2 is a cross-sectional view on the line A-A of Figure 1.
[Figure 3] Figure 3 shows a perspective view schematically showing the structure of a fuel cell electrode, and a view showing the state of a cross section at a predetermined cross-sectional position of the fuel cell electrode.
[Figure 4] Figure 4 is a schematic configuration view showing a paste application apparatus according to an embodiment.
[Figure 5] Figure 5 is an enlarged view of the paste removal portion of a doctor bar.
[Figure 6] Figure 6 is an enlarged view of the paste removal portion of a doctor bar according to a modification.
[Figure 7] Figure 7 is an enlarged view of the paste removal portion of a doctor bar according to a Comparative Example.
[Figure 8] Figure 8 is an image showing a catalyst layer and a microporous layer present in a cathode.
[Figure 9] Figure 9 is a graph obtained by plotting the amount of a microporous layer on cross sections with respect to cross-sectional positions in a thickness direction for an Example and a Comparative Example.
[Figure 10] Figure 10 is a graph obtained by plotting, with respect to a cross-sectional position, the presence frequency cumulative value of the microporous layer present in a region on the catalyst layer side of the cross-sectional position for the Example and the Comparative Example.
[Figure 11] Figure 11 is a diagram showing the results of measuring cell voltage and oxygen gain for the Example and the Comparative Example.

### Description of Embodiments

Embodiments of the present invention will be described below with reference to the drawings. In all drawings, like numerals refer to like components, and description is appropriately omitted.

### (Fuel Cell)

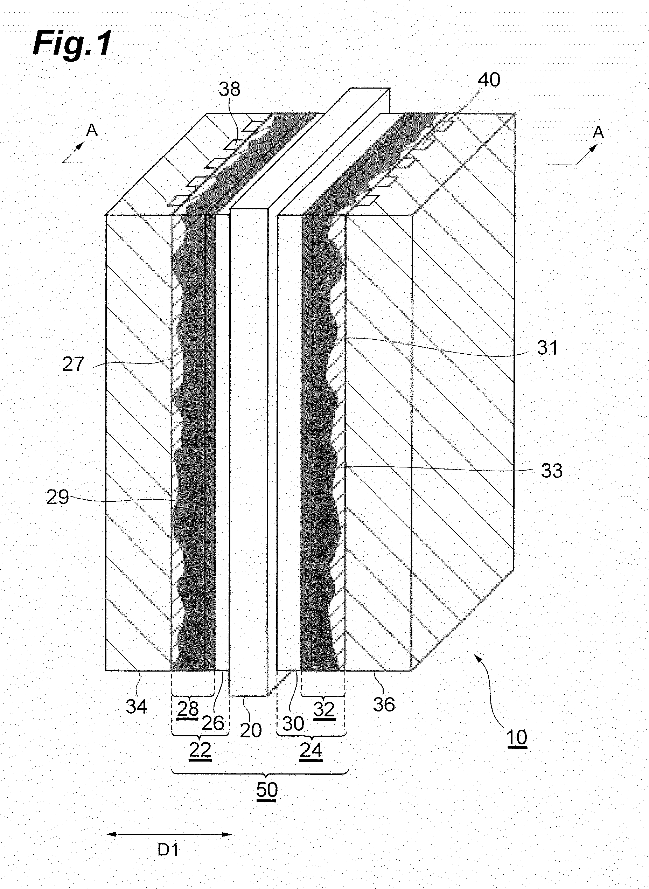

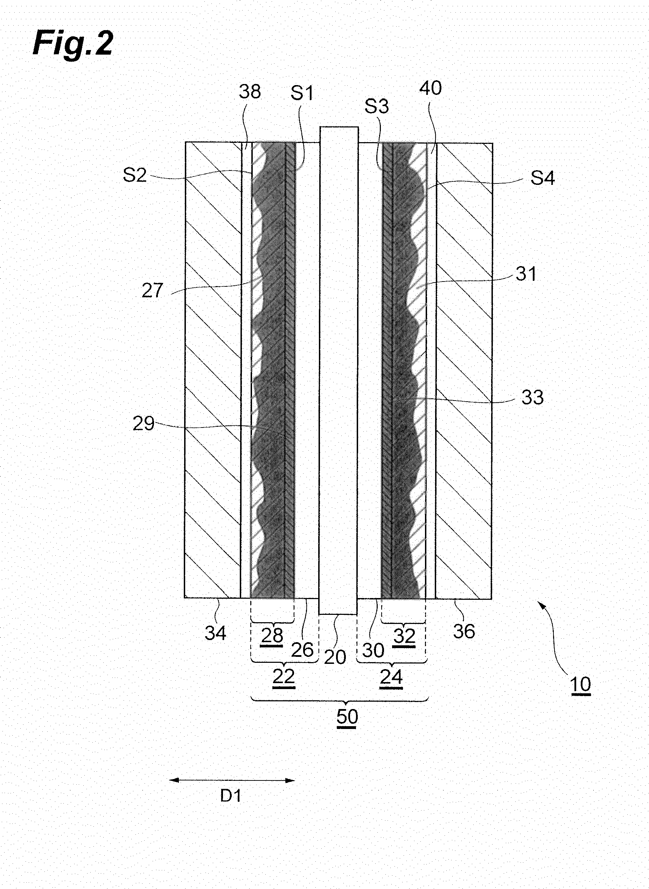

Figure 1 is a perspective view schematically showing the structure of a fuel cell 10 according to an embodiment. Figure 2 is a cross-sectional view on the line A-A of Figure 1. The fuel cell 10 comprises a flat plate-shaped membrane electrode assembly 50, and a separator 34 and a separator 36 are provided on both sides of this membrane electrode assembly 50. In this example, only one membrane electrode assembly 50 is shown, but a fuel cell stack may be formed by laminating a plurality of membrane electrode assemblies 50 via the separator 34 and the separator 36. The membrane electrode assembly 50 has a solid polymer electrolyte membrane 20, an anode (fuel cell electrode) 22, and a cathode (fuel cell electrode) 24.

The anode 22 has a laminate comprising a catalyst layer 26 and a gas diffusion layer 28. On the other hand, the cathode 24 has a laminate comprising a catalyst layer 30 and a gas diffusion layer 32. The catalyst layer 26 of the anode 22 and the catalyst layer 30 of the cathode 24 are provided so as to be opposed to each other with the solid polymer electrolyte membrane 20 sandwiched between them.

Gas flow paths 38 are provided in the separator 34 provided on the anode 22 side. A fuel gas is distributed from a manifold for fuel supply (not shown) to the gas flow paths 38, and the fuel gas is supplied to the membrane electrode assembly 50 through the gas flow paths 38. Similarly, gas flow paths 40 are provided in the separator 36 provided on the cathode 24 side.

An oxidant gas is distributed from a manifold for oxidant supply (not shown) to the gas flow paths 40, and the oxidant gas is supplied to the membrane electrode assembly 50 through the gas flow paths 40. Specifically, during the operation of the fuel cell 10, a fuel gas, for example, a reformed gas containing a hydrogen gas, flows downward from above in the gas flow paths 38 along the surface of the gas diffusion layer 28, and thus, the fuel gas is supplied to the anode 22.

On the other hand, during the operation of the fuel cell 10, an oxidant gas, for example, air, flows downward from above in the gas flow paths 40 along the surface of the gas diffusion layer 32, and thus, the oxidant gas is supplied to the cathode 24. Thus, a reaction occurs in the membrane electrode assembly 50. When the hydrogen gas is supplied to the catalyst layer 26 via the gas diffusion layer 28, hydrogen in the gas forms protons, and these protons move to the cathode 24 side through the solid polymer electrolyte membrane 20. Electrons emitted at this time move to an external circuit, and flow into the cathode 24 from the external circuit. On the other hand, when air is supplied to the catalyst layer 30 via the gas diffusion layer 32, oxygen is bonded to protons to form water. As a result, electrons flow from the anode 22 toward the cathode 24 in the external circuit, and power can be taken out.

The solid polymer electrolyte membrane 20 exhibits good ionic conductivity in a wet state, and functions as an ion exchange membrane that allows protons to move between the anode 22 and the cathode 24. The solid polymer electrolyte membrane 20 is formed of a solid polymer material, such as a fluorine-containing polymer or a non-fluorine polymer, and, for example, sulfonic acid type perfluorocarbon polymers, polysulfone resins, and perfluorocarbon polymers having a phosphonic acid group or a carboxylic acid group can be used. Examples of the sulfonic acid type perfluorocarbon polymers include Nafion (manufactured by DuPont: registered trademark) 112. In addition, examples of the non-fluorine polymer include sulfonated aromatic polyetheretherketones and polysulfones. The film thickness of the solid polymer electrolyte membrane 20 is 20 to 50 µm.

The catalyst layer 26 constituting the anode 22 is composed of an ion conductor (ion exchange resin) and carbon particles supporting a metal catalyst, that is, catalyst-supporting carbon particles. The film thickness of the catalyst layer 26 is 10 to 30 µm. The ion conductor has the role of connecting carbon particles supporting an alloy catalyst and the solid polymer electrolyte membrane 20 and transferring protons between both. The ion conductor may be formed of a polymer material similar to that of the solid polymer electrolyte membrane 20.

Examples of the metal catalyst used in the catalyst layer 26 include alloy catalysts comprising precious metals and ruthenium. Examples of the precious metals used in these alloy catalysts include platinum and palladium. In addition, examples of the carbon particles supporting the metal catalyst include acetylene black, ketjen black, carbon nanotubes, and carbon nano-onions.

The gas diffusion layer 28 constituting the anode 22 has a gas diffusion substrate 27 and a microporous layer (MPL) 29 applied to the gas diffusion substrate. The gas diffusion substrate 27 is preferably composed of a porous body having electronic conductivity, and, for example, carbon paper and woven fabric or nonwoven fabric of carbon can be used.

The microporous layer 29 applied to the gas diffusion substrate 27 is a kneaded material (paste) obtained by kneading a conductive powder and a water repellent. As the conductive powder, for example, carbon black can be used. In addition, as the water repellent, fluorine-based resins, such as a tetrafluoroethylene resin (PTFE) and a tetrafluoroethylene-hexafluoropropylene copolymer (FEP), can be used. The water repellent preferably has binding properties. Here, the binding properties refer to the property of being able to bond a less viscous material or a brittle material and make it a viscous material (state). When the water repellent has binding properties, a paste can be obtained by kneading the conductive powder and the water repellent. The gas diffusion substrate 27 has a first surface S 1 formed on the electrolyte membrane 20 side, and a second surface S2 formed opposite to the electrolyte membrane (that is, the gas flow path 38 side). The first surface S 1 and the second surface S2 are opposed to each other in the thickness direction D 1 of the anode and the gas diffusion layer.

The microporous layer 29 is applied from the first surface S1 (front surface), and disposed between the catalyst layer 26 and the gas diffusion substrate 27 (that is, on the first surface S1) and in the gas diffusion substrate 27 in a form in which a predetermined amount penetrates partly in the thickness direction D1 to the second surface S2 (back surface). The microporous layer 29 is formed so that it has continuity in the boundary portion between it and the gas diffusion substrate 27 and has continuity from the first surface S1 toward the second surface S2 in the gas diffusion substrate 27, that is, it is not interrupted in the middle. Thus, it is possible to form a carbon path that is a discharge path for produced water produced by an electrochemical reaction and increase produced water discharge properties in the gas diffusion layer 28. The detailed structure of the gas diffusion layer 28 will be described later.

The catalyst layer 30 constituting the cathode 24 is composed of an ion conductor (ion exchange resin) and carbon particles supporting a catalyst, that is, catalyst-supporting carbon particles. The ion conductor has the role of connecting the carbon particles supporting a catalyst and the solid polymer electrolyte membrane 20 and transferring protons between both. The ion conductor may be formed of a polymer material similar to that of the solid polymer electrolyte membrane 20. As the supported catalyst, for example, platinum or a platinum alloy can be used. Examples of the metal used in the platinum alloy include cobalt, nickel, iron, manganese, and iridium. Examples of the carbon particles supporting the catalyst include acetylene black, ketjen black, carbon nanotubes, and carbon nano-onions.

The gas diffusion layer 32 constituting the cathode 24 has a gas diffusion substrate 31 and a microporous layer 33 applied to the gas diffusion substrate 31. The gas diffusion substrate 31 is preferably composed of a porous body having electronic conductivity, and, for example, carbon paper and woven fabric or nonwoven fabric of carbon can be used. It is preferred to use common carbon paper as the substrates of the gas diffusion layer 32 and the gas diffusion layer 28, considering productivity. The gas diffusion substrate 31 has a first surface S3 formed on the electrolyte membrane 20 side, and a second surface S4 formed opposite to the electrolyte membrane (that is, the gas flow path 40 side). The first surface S3 and the second surface S4 are opposed to each other in the thickness direction D1 of the cathode and the gas diffusion layer.

The microporous layer 33 is applied from the first surface S3 (front surface), and disposed between the catalyst layer 30 and the gas diffusion substrate 31 (that is, on the first surface S3) and in the gas diffusion substrate 31 in a form in which a predetermined amount penetrates partly in the thickness direction D1 to the second surface S4 (back surface). The microporous layer 33 is formed so that it has continuity in the boundary portion between it and the gas diffusion substrate 31 and has continuity from the first surface S3 toward the second surface S4 in the gas diffusion substrate 31, that is, it is not interrupted in the middle. Thus, it is possible to form a carbon path that is a discharge path for produced water produced by an electrochemical reaction and increase produced water discharge properties in the gas diffusion layer 32. The detailed structure of the gas diffusion layer 32 will be described later.

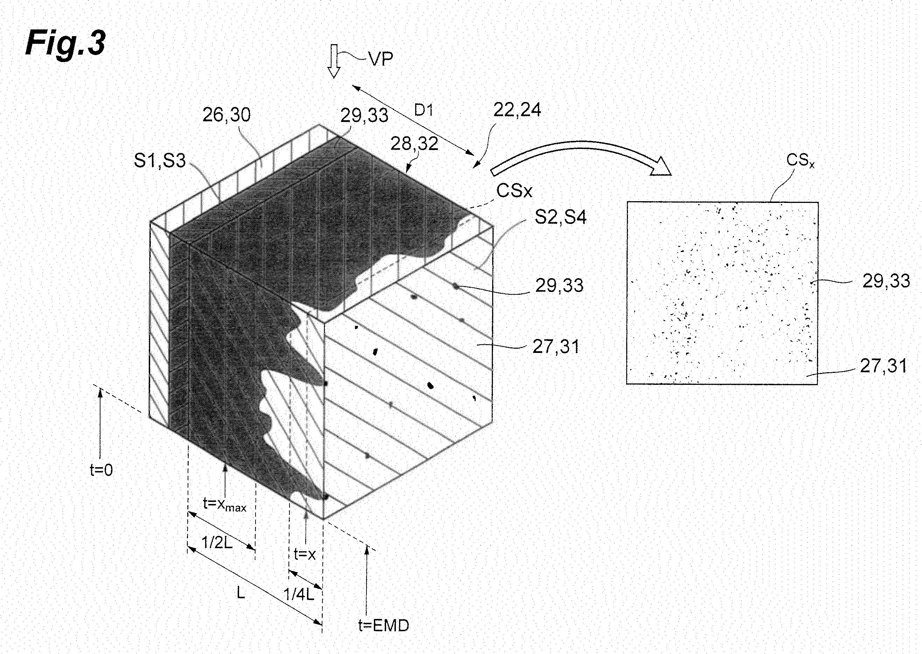

The configuration of the gas diffusion layer 28 or 32 will be described with reference to Figure 3. Figure 3 shows a perspective view schematically showing the structure of the fuel cell electrode (the anode 22 or the cathode 24), and a view showing the state of a cross section CSₓ at a predetermined cross-sectional position t = x of the fuel cell electrode. In the following description, the size of the gas diffusion substrate 27 or 31 in the thickness direction D1 is taken as L. A predetermined cross-sectional position in the thickness direction D1 is taken as t = x, and the cross section at the predetermined cross-sectional position t (= x) is taken as CSₓ. The cross section CSₓ is a plane perpendicular to the thickness direction D1 at the cross-sectional position t (= x).

The amount of the microporous layer 29 or 33 in the gas diffusion layer 28 or 32 is obtained by analysis using three-dimensional measurement X-ray CT. A predetermined region in the thickness direction D1 of the fuel cell electrode 22 or 24 (a region from a cross-sectional position t = 0 to a cross-sectional position t = END) is scanned by three-dimensional measurement X-ray CT to obtain the three-dimensional data of the internal structure of the fuel cell electrode 22 or 24. By analyzing such three-dimensional data, the amount of the microporous layer 29 or 33 can be obtained. The start point (cross-sectional position t = 0) and end point (cross-sectional position t = END) of the scan can be arbitrarily set. In order to analyze the entire microporous layer 29 or 33 included in the fuel cell electrode 22 or 24, the start point (cross-sectional position t = 0) is preferably set on the catalyst layer 26 or 30 side of the end portion of the gas diffusion layer 28 or 32, and the end point (cross-sectional position t = END) is preferably set on the gas flow path 38 or 40 side of the second surface S2 or S4.

Using the three-dimensional data, an image of a cross section CSₓ at a predetermined cross-sectional position t (= x) is obtained. One example of an image of the cross section CSₓ is shown in Figure 3. In the example shown in Figure 3, the portion of the white background is the gas diffusion substrate 27 or 31, and the regions scattered in a spotted manner indicate the microporous layer 29 or 33, a portion constituting the discharge path for produced water. By analyzing the image of the cross section CSₓ, the area ratio of the microporous layer 29 or 33 at the cross-sectional position t (= x) is obtained. The area ratio refers to the proportion of the total area of the microporous layer 29 or 33 on the cross section CSₓ to the area of the cross section CSₓ. By obtaining such images of cross sections CSₓ at a predetermined pitch along the thickness direction D 1 from the cross-sectional position t = 0 to the cross-sectional position t = END, area ratios at the cross-sectional positions t are obtained. The pitch is preferably set to 0.1 to 2.0 µm. In addition, a value obtained by totaling all area ratios at the cross-sectional positions at t = 0 to x is obtained as an area ratio cumulative value at the cross-sectional position t = x. Further, a value obtained by totaling all area ratios at the cross-sectional positions t = 0 to END, that is, a value corresponding to the total amount of the entire microporous layer 29 or 33 included in the fuel cell electrode 22 or 24, is obtained as a standard value.

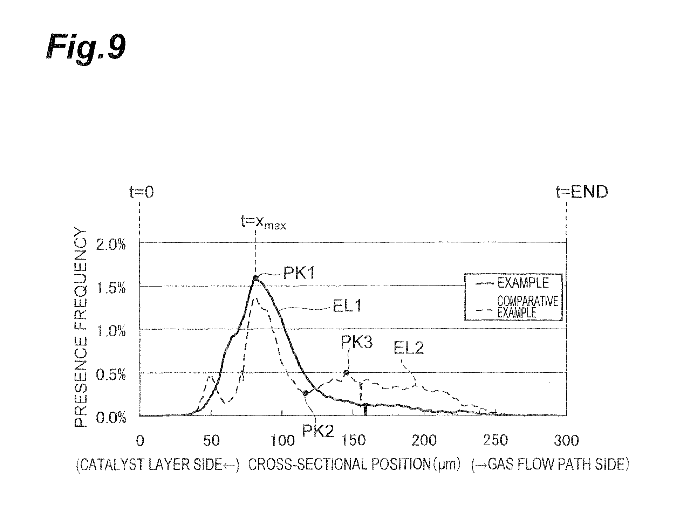

After the above-described operation, a value obtained by dividing an area ratio at a predetermined cross-sectional position t by the standard value (the total of all area ratios) is obtained as presence frequency (%) at the cross-sectional position t. Such presence frequency (%) can be handled as a value indicating to what extent the microporous layer 29 or 33 is present at a predetermined cross-sectional position t. Since the presence frequency (%) is a value standardized by the standard value, the fuel cell electrodes 22 or 24 in which the total amounts of the microporous layers 29 or 33 are different can be compared with each other. Using the presence frequency (%), for example, a curve obtained by plotting the amount of the microporous layer 29 or 33 on the cross sections CSₓ with respect to the cross-sectional positions t in the thickness direction D1, as shown in Figure 9, is obtained. At a cross-sectional position t = xₘₐₓ (first cross-sectional position), the amount of the microporous layer 29 or 33 is maximum. The operation method for the presence frequency is not limited to the one described above, and any value may be used as long as it can indicate to what extent the microporous layer 29 or 33 is present at a predetermined cross-sectional position t (= x).

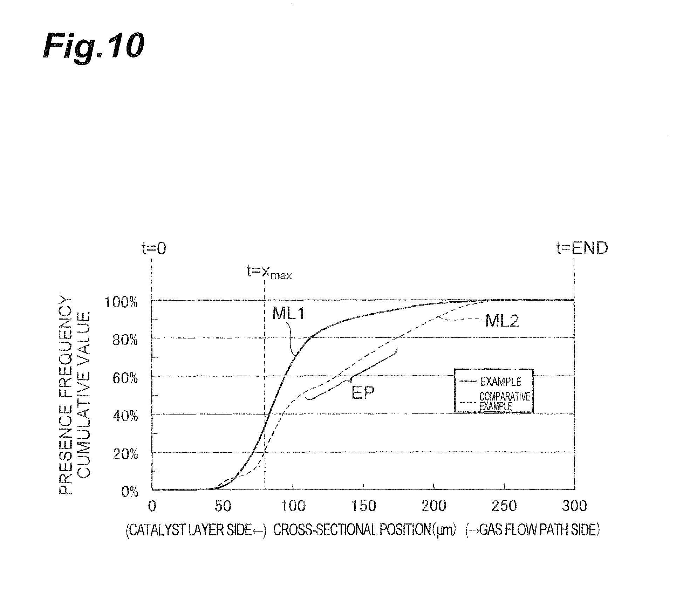

Further, a value obtained by dividing an area ratio cumulative value at a predetermined cross-sectional position t by the standard value (the total of all area ratios) is obtained as a presence frequency cumulative value (%) at the cross-sectional position t. Such a presence frequency cumulative value (%) can be handled as a value indicating to what extent the microporous layer 29 or 33 is present in a region between the cross-sectional position t = 0 and the cross-sectional position t = x. Since the presence frequency cumulative value (%) is a value standardized by the standard value, the fuel cell electrodes 22 or 24 in which the total amounts of the microporous layers 29 or 33 are different can be compared with each other. Using the presence frequency cumulative value (%), for example, a curve obtained by plotting, with respect to a cross-sectional position t, the presence frequency cumulative value of the microporous layer 29 or 33 present in a region on the catalyst layer 26 or 30 side of the cross-sectional position t, as shown in Figure 10, is obtained. The presence frequency cumulative value is 0% at the cross-sectional position t = 0 and 100% at the cross-sectional position t = END. The operation method for the presence frequency cumulative value is not limited to the one described above. In addition, the presence frequency cumulative value is not limited to the presence frequency cumulative value as described above as long as it is a value that can indicate in what proportion the amount of the microporous layer 29 or 33 included in a region on the catalyst layer 26 or 30 side of a predetermined cross-sectional position t in the thickness direction D1 is present with respect to the amount of the entire microporous layer 29 or 33, and any value may be used.

In the gas diffusion layer 28 or 32, the microporous layer 29 or 33 is continuous along the thickness direction D1. The microporous layer 29 or 33 infiltrates through the gas diffusion substrate 27 or 31 from the first surface S 1 or S3 toward the thickness direction D 1 and is continuous to the second surface S2 or S4. In other words, in the first surface S1 or S3 and the gas diffusion substrate 27 or 31, particles constituting the microporous layer 29 or 33 are connected to each other in the entire region from the first surface S 1 or S3 to the second surface S2 or S4, and a portion in which the microporous layer 29 or 33 is completely divided in the thickness direction D1 is not formed (for example, at a predetermined cross-sectional position, even if divided portions are present in some regions, the microporous layer 29 or 33 is continuous in other portions). Since the microporous layer 29 or 33 constitutes the discharge path for produced water, the discharge path is arranged to be continuous in the thickness direction D1 in the gas diffusion substrate 27 or 31, ensuring a path communicating between the first surface S 1 or S3 and the second surface S2 or S4. The discharge path continuous in the thickness direction D1 is maintained in the gas diffusion layer 28 or 32 in this manner, and thus, the discharge of produced water is efficiently performed.

The amount of the microporous layer 29 or 33 on a cross section perpendicular to the thickness direction D1 is maximum at the cross-sectional position t = xₘₐₓ (first cross-sectional position) in the thickness direction D 1 and decreases from the cross-sectional position t = xₘₐₓ toward the second surface S2 or S4. In a region on the second surface S2 or S4 side of the cross-sectional position t = xₘₐₓ, the amount of the microporous layer 29 or 33 in a cross section CSₓ reduces uniformly toward the second surface S2 or S4. In other words, toward the second surface S2 or S4, the amount of the microporous layer 29 or 33 in a cross section CSₓ decreases, the same amount is maintained, or the amount of the microporous layer 29 or 33 in a cross section CSₓ only increases locally even if it increases. For example, when a divided region in which the microporous layer 29 or 33 is largely divided in the thickness direction D1 is present in the gas diffusion layer 28 or 32, water accumulation occurs in the divided region (even if the discharge path for produced water is ensured in other portions), and the water discharge efficiency decreases. The presence frequency (%) of the microporous layer 29 or 33 in a cross section CSₓ decreases partially in such a divided region, and increases again in a portion on the second surface S2 or S4 side of the divided region. On the other hand, a structure in which the presence frequency (%) of the microporous layer 29 or 33 decreases uniformly from the cross-sectional position t = xₘₐₓ toward the second surface S2 or S4 is a structure in which a region in which the presence frequency (%) of the microporous layer 29 or 33 decreases partially, that is, a divided region of such a size that causes water accumulation, is not formed (or even if a small divided region is present, it is of such a size that does not affect water discharge performance). Therefore, a structure in which water accumulation is not caused in the middle of the discharge path for produced water can be provided.

Specifically, a curve obtained by plotting the amount of the microporous layer 29 or 33 on the cross sections CSₓ with respect to the cross-sectional positions t preferably has no local minimum point between the cross-sectional position t = xₘₐₓ and the second surface S2 or S4 (for example, a graph EL1 in the example of Figure 9 decreases without a local minimum point being formed, as the tendency of the entire graph, in a region on the gas flow path side of a cross-sectional position t = xₘₐₓ). Or, even if the curve has a local minimum point, the difference between the maximum value on the second surface S2 or S4 side of the local minimum point and the value at the local minimum point is preferably 5% or less of the value at the cross-sectional position t = xₘₐₓ. When the difference is 5% or less, the water discharge performance is not affected, and such a curve can be handled as within the range of manufacturing error. For example, even such one that has a local minimum point PK2 and a local maximum point PK3 on the gas flow path side of a local maximum point PK1 that is maximum, like a graph EL2 shown in Figure 9, can be handled as within the range of manufacturing error when the difference between the value of the local maximum point PK3 and the value of the local minimum point PK2 is 5% or less of the value of the local maximum point PK1. In addition, an spike point occurring locally in the range of 2 µm or less in the thickness direction D1 (for example, such a data portion that only one or two points in a plot protrude in three-dimensional data analysis) can also be handled as within the range of error.

In addition, when the amount of the microporous layer 29 or 33 reduces uniformly toward the second surface S2 or S4, a graph of presence frequency cumulative values draws a curve that curves asymptotically toward 100% in a region on the gas flow path side of the cross-sectional position t = xₘₐₓ (a region graph on the gas flow path side of the cross-sectional position t = xₘₐₓ is composed of only a curve that curves to be raised upward), like a graph ML1 in Figure 10. On the other hand, when the amount of the microporous layer 29 or 33 does not reduce uniformly toward the second surface S2 or S4, a graph of presence frequency cumulative values may draw a curve portion that curves to be raised downward in a region on the gas flow path side of the cross-sectional position t = xₘₐₓ, like a portion shown by EP in a graph ML2 in Figure 10.

For the amount of the microporous layer 29 or 33 on a cross section perpendicular to the thickness direction D1, the mode of increase is not particularly limited in a region on the catalyst layer 26 or 30 side of the cross-sectional position t = xₘₐₓ, and the amount preferably increases from the catalyst layer 26 or 30 side (first surface S 1 or S3 side) toward the cross-sectional position t = xₘₐₓ. In a region on the first surface S 1 or S3 side of the cross-sectional position t = xₘₐₓ, the amount of the microporous layer 29 or 33 in a cross section CSₓ increases uniformly toward the cross-sectional position t = xₘₐₓ. In other words, toward the cross-sectional position t = xₘₐₓ, the amount of the microporous layer 29 or 33 in a cross section CSₓ increases, the same amount is maintained, or the amount of the microporous layer 29 or 33 in a cross section CSₓ only decreases locally even if it decreases. For example, when a divided region in which the microporous layer 29 or 33 is largely divided in the thickness direction D1 is present in the gas diffusion layer 28 or 32, water accumulation occurs in the divided region (even if the discharge path for produced water is ensured in other portions), and the water discharge efficiency decreases. The presence frequency (%) of the microporous layer 29 or 33 in a cross section CSₓ decreases partially in such a divided region, and increases again in a portion on the cross-sectional position t = xₘₐₓ side of the divided region. On the other hand, a structure in which the presence frequency (%) of the microporous layer 29 or 33 increases uniformly from the catalyst layer 26 or 30 side (first surface S1 or S3 side) toward the cross-sectional position t = xₘₐₓ is a structure in which a region in which the presence frequency (%) of the microporous layer 29 or 33 decreases partially, that is, a divided region of such a size that causes water accumulation, is not formed (or even if a small divided region is present, it is of such a size that does not affect water discharge performance). Therefore, a structure in which water accumulation is not caused in the middle of the discharge path for produced water can be provided.

For example, a curve obtained by plotting the amount of the microporous layer 29 or 33 on the cross sections CSₓ with respect to the cross-sectional positions t preferably has no local minimum point between the catalyst layer 26 or 30 and the cross-sectional position t = xₘₐₓ (for example, the graph EL1 in the example of Figure 9 increases without a local minimum point being formed, as the tendency of the entire graph, in a region on the catalyst layer side of the cross-sectional position t = xₘₐₓ). Thus, in the catalyst layer 26 or 30 side (first surface S1 or S3 side) from the cross-sectional position t = xₘₐₓ, the amount of the microporous layer 29 or 33 increases toward the cross-sectional position t = xₘₐₓ, and a structure in which water accumulation is not caused in the middle of the discharge path for produced water can be provided.

Or, it is preferable that even if the curve has a local minimum point, the difference between the maximum value on the catalyst layer side of the local minimum point and the value at the local minimum point is 5% or less of the value at the cross-sectional position t = xₘₐₓ. When the difference is 5% or less, the water discharge performance is not affected, and such a curve can be handled as within the range of manufacturing error. In addition, a spike point occurring locally in the range of 2 µm or less in the thickness direction D1 (for example, such a data portion that only one or two points in a plot protrude in three-dimensional data analysis) can also be handled as within the range of error.

In addition, when the amount of the microporous layer 29 or 33 increases uniformly toward the cross-sectional position t = xₘₐₓ, a graph of presence frequency cumulative values draws a curve that curves asymptotically toward 0% in a region on the catalyst layer side of the cross-sectional position t = xₘₐₓ (a region graph on the catalyst layer side of the cross-sectional position t = xₘₐₓ is composed of only a curve that curves to be raised downward), like the graph ML1 in Figure 10. On the other hand, when the amount of the microporous layer 29 or 33 does not increase uniformly toward the cross-sectional position t = xₘₐₓ, a graph of presence frequency cumulative values may draw a curve portion that curves to be raised upward and then raised downward, like a portion on the catalyst layer side of the cross-sectional position t = xₘₐₓ in the graph ML2 in Figure 10.

The amount of the microporous layer 29 or 33 included in a region on the catalyst layer 26 or 30 side (first surface S1 or S3 side) of the central position of the gas diffusion substrate 27 or 31 in the thickness direction D1 is preferably 80% or more, more preferably 85% or more, of the amount of the entire microporous layer 29 or 33 in the fuel cell electrode 22 or 24. In this embodiment, the proportion of the amount of the microporous layer 29 or 33 in the gas diffusion layer 28 or 32 is expressed in the presence frequency cumulative value (%) of the microporous layer 29 or 33 shown in Figure 10. By setting the amount of the microporous layer 29 or 33 included in the region on the catalyst layer 26 or 30 side of the central position of the gas diffusion substrate 27 or 31 in the thickness direction D1 to 80% or more in this manner, the amount of the microporous layer 29 or 33 in a region on the side of the interface between the catalyst layer 26 or 30 and the microporous layer 29 or 33 can be sufficiently ensured, and high produced water extraction ability from the interface can be exhibited. In addition, it is necessary to ensure such an amount that the microporous layer 29 or 33 has continuity and extends to the second surface S2 or S4, also for a region on the gas flow path side of the central position of the gas diffusion substrate 27 or 31. Therefore, the amount of the microporous layer 29 or 33 included in the region on the catalyst layer 26 or 30 side of the central position of the gas diffusion substrate 27 or 31 in the thickness direction D1 is preferably 98% or less, more preferably 95% or less, of the amount of the entire microporous layer 29 or 33 in the fuel cell electrode 22 or 24.

The microporous layer 29 or 33 extends to the second surface S2 or S4 of the gas diffusion substrate 27 or 31. By allowing the microporous layer 29 or 33 to extend to the second surface S2 or S4, the microporous layer 29 or 33 is continuous from the first surface S 1 or S3 to the second surface S2 or S4 in the gas diffusion substrate 27 or 31, and the discharge path for produced water can be ensured to the gas flow paths 38 or 40. Confirmation that the microporous layer 29 or 33 extends to the second surface S2 or S4 of the gas diffusion substrate 27 or 31 can be performed by confirmation in three-dimensional data analysis that the microporous layer 29 or 33 is present on a cross section corresponding to the second surface S2 or S4, or by observing the appearance of the second surface S2 or S4 of the actual fuel cell electrode.

From the above, according to the fuel cell electrode 22 or 24, the membrane electrode assembly 50, and the fuel cell 10 according to this embodiment, by maintaining the discharge path continuous in the thickness direction D1 in the gas diffusion layer 28 or 32, the discharge of produced water is efficiently performed. In addition, a structure in which water accumulation is not caused in the middle of the discharge path for produced water can be provided. In addition, by sufficiently ensuring the amount of the microporous layer 29 or 33 in the region on the side of the interface between the catalyst layer 26 or 30 and the microporous layer 29 or 33, high produced water extraction ability from the interface can be exhibited. In addition, by allowing the microporous layer 29 or 33 to extend to the second surface S2 or S4, it is possible to allow the microporous layer 29 or 33 to continue to the second surface S2 or S4 and ensure the discharge path for produced water to the gas flow paths 38 or 40. By the above, while gas diffusivity can also be maintained, water produced by an electrochemical reaction can be efficiently discharged. Thus, it is possible to achieve both water discharge properties and gas diffusivity as the fuel cell 10 and improve voltage characteristics.

In the above-described fuel cell 10, the structure of the gas diffusion layer satisfying the above-described conditions is preferably used in both of the anode 22 and the cathode 24, and should be used in only at least one. By using the structure in the cathode, the discharge properties of water produced in the cathode catalyst layer can be improved. In addition, by using the structure in the anode, the discharge properties of water back-diffused into the anode from the cathode through the electrolyte membrane can be improved. The back diffusion is a phenomenon in which water moves from the cathode to the anode due to the water concentration gradient between the anode and the cathode.

### (Paste Application Apparatus)

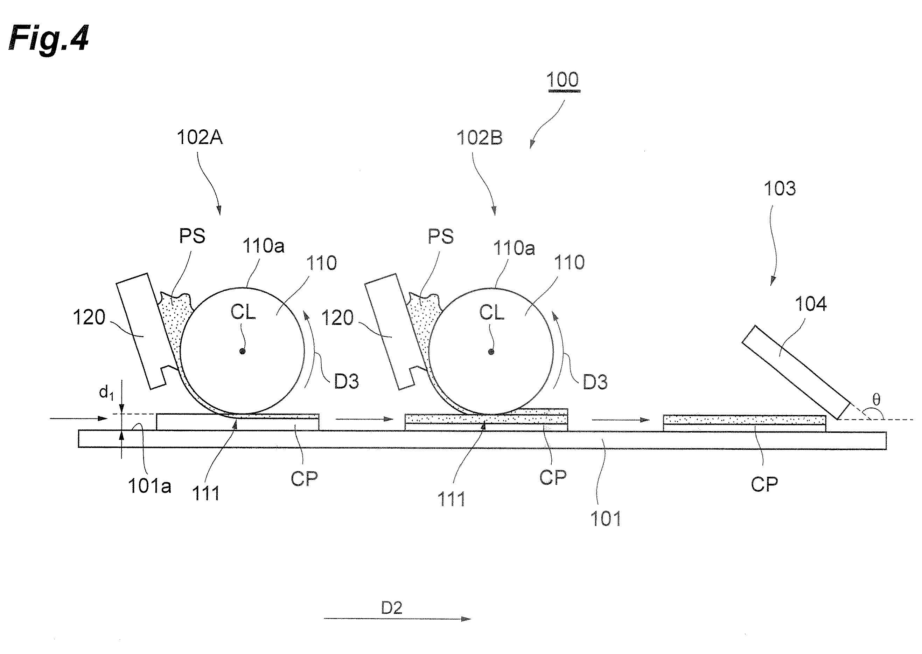

Figure 4 is a schematic configuration view showing a paste application apparatus 100 according to this embodiment. The paste application apparatus 100 is an apparatus that applies a paste for the microporous layer 29 or 33 to the gas diffusion substrate 27 or 31 constituting the anode 22 or the cathode 24 of the fuel cell 10. By using the paste application apparatus 100, the gas diffusion layer 28 or 32 having high water discharge properties as described above can be made. The paste application apparatus 100 can be used for both of the gas diffusion layers 28 and 32 of the anode 22 and the cathode 24, and therefore, in the description of the paste application apparatus 100, the gas diffusion substrate and the paste in the manufacturing process are described as CP and PS, respectively. The paste application apparatus 100 comprises a conveyance portion 101 that conveys the gas diffusion substrate CP in a conveyance direction D2, a first roll coater application portion 102A and a second roll coater application portion 102B that apply the paste PS to the gas diffusion substrate CP by roll coater application, and a surface finishing portion 103 that performs the surface finishing of the paste PS applied to the gas diffusion substrate CP. The paste application apparatus 100 comprises the first roll coater application portion 102A, the second roll coater application portion 102B, and the surface finishing portion 103 in this order from the upstream side toward the downstream side in the conveyance direction D2 of the conveyance portion 101.

In the conveyance portion 101, the gas diffusion substrate CP is placed on an upper surface 101a, and moves in the conveyance direction D2 by the rotation of a back roll, not shown, disposed on the lower surface side. The first roll coater application portion 102A and the second roll coater application portion 102B comprise an application roll 110 that is disposed on the upper surface 101a side of the conveyance portion 101 and applies the paste PS to the gas diffusion substrate CP, and a doctor bar 120 that adjusts the amount of the paste PS provided to a surface 110a of the application roll 110. As the first roll coater application portion 102A and the second roll coater application portion 102B, for example, a roll coater application apparatus (manufactured by FURNACE Co., Ltd.) can be used. The first roll coater application portion 102A and the second roll coater application portion 102B perform by one surface application from the catalyst layer side of the gas diffusion substrate CP. In other words, the paste PS is applied from one surface on the catalyst layer side, and allowed to infiltrate into the gas diffusion substrate CP and reach the surface on the gas flow path side. In addition, the first roll coater application portion 102A and the second roll coater application portion 102B can apply the paste PS provided to the surface 110a of the application roll 110 to the gas diffusion substrate CP in a flattened state without causing unevenness, streaks, lumps, and the like. Therefore, air does not intrude between the paste PS applied by the first roll coater application portion 102A and the paste PS applied by the second roll coater application portion 102B, and a microporous layer having high continuity can be obtained. The viscosity of the paste PS is preferably 10000 to 100000 mPa·s. If the viscosity is less than 10000 mPa·s, the paste PS is too easy to infiltrate on the gas flow path side of the gas diffusion substrate CP, and the amount of the microporous layer on the catalyst layer side cannot be maintained. On the other hand, if the viscosity is more than 100000 mPa·s, the paste PS is too difficult to infiltrate on the flow path side of the gas diffusion substrate CP, and the amount of the microporous layer on the gas flow path side cannot be maintained.

The application roll 110 is disposed so that its rotation central axis CL is parallel to the upper surface 101a of the conveyance portion 101 and orthogonal to the conveyance direction D2. The application roll 110 rotates in a rotation direction D3 around the rotation central axis CL. The surface 110a of the application roll 110 is disposed so as to be apart from the upper surface 101a of the conveyance portion 101 at the lower end. The gas diffusion substrate CP passes between the surface 110a of the application roll 110 and the upper surface 101a of the conveyance portion 101, and the paste PS provided to the surface 110a of the application roll 110 is transferred to the gas diffusion substrate CP at the application position 111. The doctor bar 120 is disposed on the upstream side of the application position 111 in the rotation direction D3. Thus, the paste PS provided to the surface 110a of the application roll 110 is applied at the application position 111 in a state in which film thickness (amount applied) is adjusted and the paste PS is smoothed. The material of the application roll 110 is preferably urethane, and stainless steel (SUS) can also be used.

The surface finishing portion 103 comprises a squeegee 104 disposed on the upper surface 101a side of the conveyance portion 101. The squeegee 104 is disposed so as to form a gap between the lower end portion and the upper surface 101a of the conveyance portion 101, and the gas diffusion substrate CP passes through the gap, and the surface finishing of the paste PS applied to the gas diffusion substrate CP is performed. The material of the squeegee 104 is preferably stainless steel (SUS), and polyethylene and urethane can also be used.

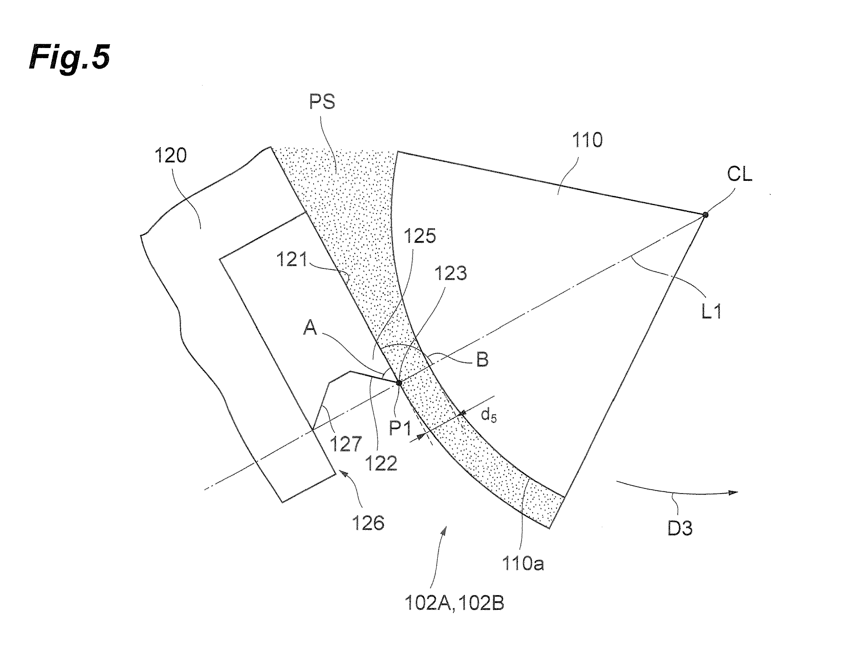

The configuration of the doctor bar 120 will be described in detail with reference to Figure 5. Figure 5 is an enlarged view of the paste PS removal portion 125 of the doctor bar 120. Figure 5 is a view as viewed from the rotation central axis direction of the application roll 110. As shown in Figure 5, the doctor bar 120 has the removal portion 125 that removes the excess paste PS of the paste PS provided to the surface 110a of the application roll 110. The removal portion 125 has the function of smoothing the paste PS provided to the surface 110a. The material of the doctor bar 120 is preferably stainless steel (SUS), and urethane can also be used.

The removal portion 125 comprises a removal surface 121 that expands so as to be opposed to the surface 110a of the application roll 110, a folded-back surface 122 that crosses the removal surface 121 and expands in a direction away from the surface 110a of the application roll 110, and an edge portion 123 that is formed between the removal surface 121 and the folded-back surface 122. The paste PS is supplied between the removal surface 121 and the application roll 110.

The edge portion 123 constitutes the nearest point P1 closest to the surface 110a of the application roll 110, of the removal portion 125. When the nearest point P1 and the rotation central axis CL are connected by a virtual line L1, the portions constituting the removal portion 125 are provided only on the virtual line L1 or on the upstream side of the virtual line L 1 in the rotation direction D3. In the removal portion 125 in this embodiment, the removal surface 121 expands on the upstream side of the edge portion 123 constituting the nearest point P1, in the rotation direction D3. In addition, the edge portion 123 is formed at an acute angle, and the folded-back surface 122 is folded back from the edge portion 123 toward the upstream side in a direction away from the virtual line L1. Thus, the folded-back surface 122 is disposed on the upstream side of the virtual line L1 in the rotation direction D3. Therefore, there are no portions protruding on the downstream side of the virtual line L1 in the rotation direction D3 in the removal portion 125, and all portions are provided only on the virtual line L1 and on the upstream side of the virtual line L1 in the rotation direction D3. The folded-back surface 122 constituting the removal portion 125 is a portion directly coupled to the edge portion 123. Portions that are apart from the edge portion 123 and do not affect paste PS removal performance, and portions that cannot affect the smoothness of the paste PS after removal, such as a surface 127 and a support portion 126, which are apart from the edge portion 123, are not included in the removal portion 125. Therefore, the surface 127 and the support portion 126 may protrude on the downstream side of the virtual line L1 in the rotation direction D3. In the edge portion 123, R may be formed, or chamfering may be performed. This is because with R-forming or chamfering within the range formed in a usual machining step, even if R-forming or chamfering is performed in the edge portion 123, the paste PS being pulled, and the like do not occur, and the application performance is not affected. When R-forming or chamfering is performed, an intersection point when the removal surface 121 and the folded-back surface 122 are extended to the tip side (that is, the tip of the edge portion 123 before R-forming or chamfering is performed) is set as the nearest point P1.

Unless the removal portion 125 protrudes on the downstream side of the virtual line L1 in the rotation direction D3, the configuration of the removal portion 125 may be changed. The angle A of the removal portion 125, that is, the angle A between the removal surface 121 and the folded-back surface 122, is preferably 30° to 90°, more preferably 60° or less. By setting the angle A to 30° or more, it is possible to ensure the making precision of the removal portion 125 and ensure strength. By setting the angle A to an acute angle of 60° or less, the folded-back surface 122 can be more reliably prevented from pulling the paste PS after film thickness adjustment. In addition, the angle B between the removal surface 121 and the virtual line L1 is preferably 90° to 120°. By setting the angle B to 120° or less, damage to the application roll 110 can be decreased. However, angle adjustment is performed with "the angle A + the angle B" being in the range of 180° or less so that the removal portion 125 does not protrude on the downstream side of the virtual line L 1 in the rotation direction D3. In addition, the doctor bar 120 is set to an angle equal to or less than an angle that does not interfere with the conveyed gas diffusion substrate CP.

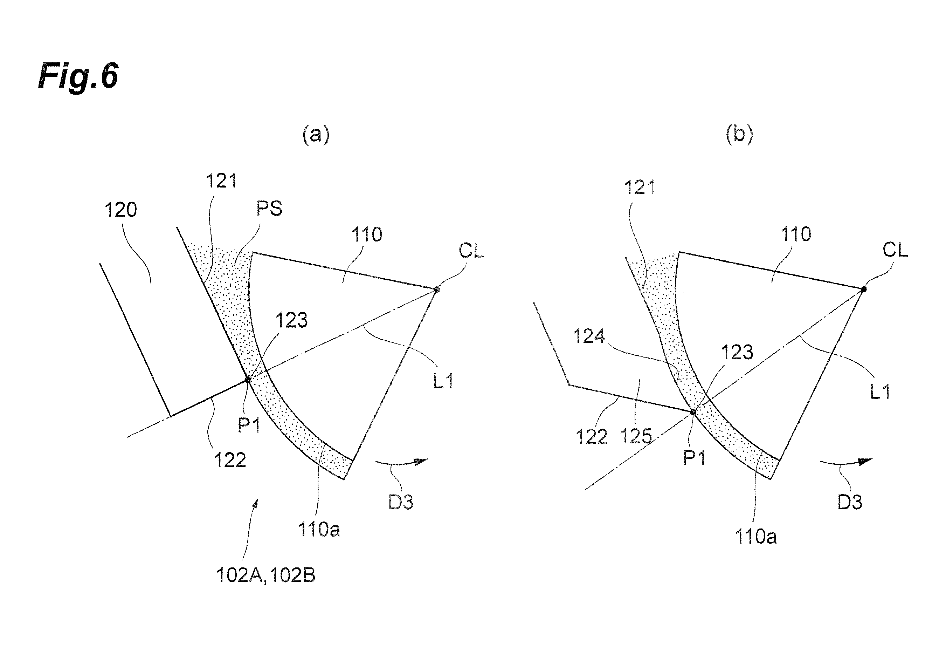

For example, the removal portion 125 may have configurations as shown in Figure 6. In the example shown in Figure 6(a), a configuration is provided in which the removal surface 121 and the folded-back surface 122 are perpendicular to each other, and the folded-back surface 122 is disposed on the virtual line L1. In the example shown in Figure 6(b), an arc surface 124 that is curved so as to be parallel to the surface 110a of the application roll 110 is formed in the tip portion of the removal surface 121. When the arc surface 124 is formed concentrically around the rotation central axis CL, the entire arc surface 124 has nearest points. In such a case, the virtual line L1 is set with respect to the nearest point P1 on the most downstream side in the rotation direction D3 (that is, the edge portion 123), among the plurality of nearest points.

Returning to Figure 5, a gap is formed between the edge portion 123 constituting the nearest point P1 and the surface 110a of the application roll 110. The paste PS passing through the gap, of the paste PS provided to the application roll 110, moves toward the application position 111 in a state in which an excess portion is removed and the paste PS is smoothed by the removal surface 121 and the edge portion 123. By adjusting the size d₅ of this gap, the amount of the paste PS transferred to the gas diffusion substrate CP is adjusted. The size d₅ of this gap is preferably set larger in the second roll coater application portion 102B on the downstream side than in the first roll coater application portion 102A on the upstream side in the conveyance direction D2. When the thickness d₁ of the gas diffusion substrate CP is 150 to 230 µm, the size d₅ of the gap in the first roll coater application portion 102A is preferably set to 80 to 100 µm, and the size d₅ of the gap in the second roll coater application portion 102B is preferably set to 100 to 120 µm. By making the gap in the second roll coater application portion 102B larger than that in the first roll coater application portion 102A, it is possible to contribute to setting the amount of the microporous layer to 80% or more in the region on the catalyst layer side of the central position of the substrate.

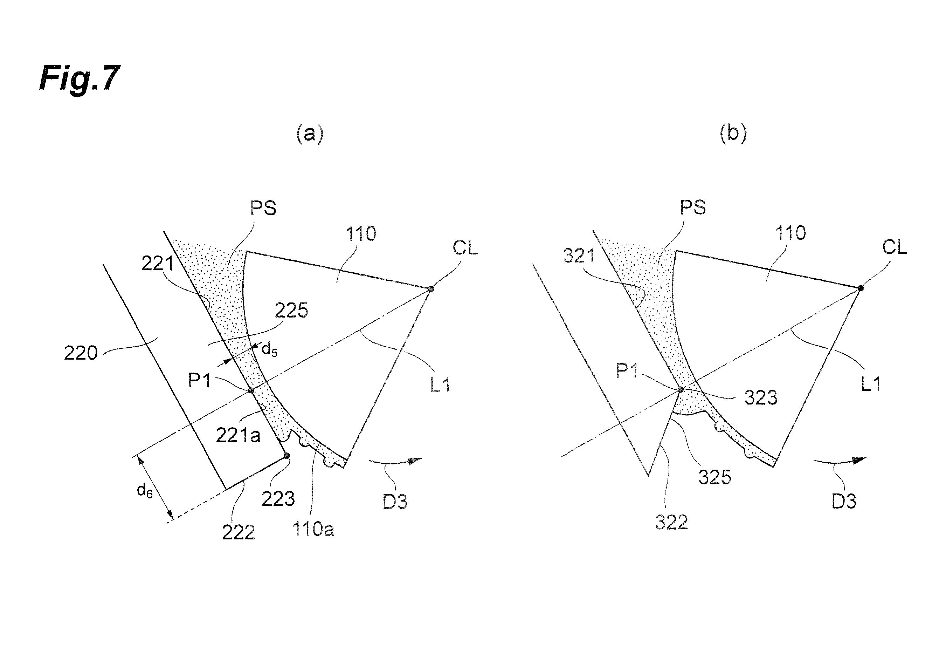

Here, paste application apparatuses according to Comparative Examples will be described using Figure 7. In the removal portion 225 of a doctor bar 220 according to the Comparative Example shown in Figure 7 (a), the nearest point P1 is set in the middle of a removal surface 221, and the removal surface 221 has a surface 221 a that extends to the downstream side of a virtual line L1 in a rotation direction D3. In addition, an edge portion 223 and a folded-back surface 222 are formed on the downstream side of the virtual line L1. In such a configuration, also after a paste PS provided to the surface 110a of an application roll 110 is subjected to film thickness adjustment by passing the nearest point P1, the paste PS is pulled by the surface 221a on the downstream side of the virtual line L1, causing unevenness, streaks, lumps, and the like. In the removal portion 325 of a doctor bar 320 according to the Comparative Example shown in Figure 7 (b), an edge portion 323 between a removal surface 321 and a folded-back surface 322 constitutes the nearest point P1, but the folded-back surface 322 expands from the edge portion 323 toward the downstream side in a rotation direction D3. Thus, the removal portion 325 has a portion that projects on the downstream side of a virtual line L1. The portion is a portion that easily pulls the surface of a paste PS after passing the edge portion 323. In such a configuration, also after the paste PS provided to the surface 110a of an application roll 110 is subjected to film thickness adjustment by passing the edge portion 323 that is the nearest point P1, the paste PS is pulled by the folded-back surface 322 present on the downstream side of the virtual line L1, causing unevenness, streaks, lumps, and the like.

On the other hand, in the paste application apparatus 100 according to this embodiment, the portions constituting the removal portion 125 are provided only on the virtual line L 1 or on the upstream side of the virtual line L1 in the rotation direction D3 as viewed from the rotation central axis direction of the application roll 110. In other words, the removal portion 125 is a structure that does not have a portion that projects on the downstream side of the virtual line L1 in the rotation direction D3. The removal surface 121 opposed to the surface 110a of the application roll 110 can remove the excess portion of the paste PS provided to the surface 110a of the application roll 110. In addition, the edge portion 123 that is formed between the removal surface 121 and the folded-back surface 122 is a portion that constitutes the nearest point P1 closest to the surface 110a of the application roll 110, and has the function of adjusting the thickness of the paste PS and smoothing the paste surface in the downstream side end portion of the removal surface 121. The folded-back surface 122 coupled to the edge portion 123 is disposed on the virtual line L1 or on the upstream side of the virtual line L1 in the rotation direction D3, and therefore, a smooth state can be maintained without pulling the paste surface subjected to film thickness adjustment and surface finishing by the edge portion 123. Thus, the paste PS can move toward the gas diffusion substrate CP in a stable state (smooth state).

From the above, a portion that projects on the downstream side of the virtual line L1 is not present in the doctor bar 120, and therefore, the paste PS after being subjected to film thickness adjustment can move toward the gas diffusion substrate CP in a stable state (smooth state) without causing unevenness, streaks, lumps, and the like. By stabilizing (smoothing) the state of the applied paste in this manner, the stabilization of the amount of the paste PS applied can be promoted. In addition, the stabilization of the applied state of the paste PS and infiltration depth into the gas diffusion substrate CP can be promoted. In addition, by applying the paste PS in a stable state, the paste PS infiltrates well into the gas diffusion substrate CP without being interrupted in the middle, and thus, it is possible to form a microporous layer having high continuity in the gas diffusion substrate CP. In addition, it is also possible to reduce preliminary stirring time for the paste PS (stirring time for inhibiting the occurrence of lumps, and the like until application is started after the paste is introduced into the roll coater application apparatus). Further, it is possible to form a microporous layer by good paste application in this manner, and thus, by using a fuel cell electrode made by the paste application apparatus 100, the stabilization of the cell performance of a fuel cell can be promoted. By the above, it is possible to improve the application performance of the paste and improve the cell performance of the fuel cell.

In addition, in the paste application apparatus 100 according to this embodiment, in the conveyance direction D2 of the conveyance portion 101, a plurality of the application rolls 110 and the doctor bars 120 are provided, and the first roll coater application portion 102A and the second roll coater application portion 102B are provided. When the plurality of the roll coater application portions 102A and 102B are used, it is possible to apply a sufficient amount of the paste PS to the gas diffusion substrate CP even if the film thickness of the paste PS per application roll 110 is decreased. When the film thickness per application roll 110 is kept small, variations in the paste PS can be made smaller than in a case where the film thickness is large. Here, when a plurality of rolls are used in a state in which unevenness, streaks, lumps, and the like occur in the paste as in the past, air enters between the paste PS in the first layer and the paste PS in the second layer, and thus, the paste PS is divided, and continuity is lost. However, in this embodiment, it is possible to apply the paste PS in a smooth state, and therefore, even if a plurality of the application rolls 110 are used, it is possible to prevent air from entering between the paste PS in the first layer and the paste PS in the second layer and maintain high continuity.

### Examples

Gas diffusion layers, fuel cell electrodes, and membrane electrode assemblies according to an Example and a Comparative Example were manufactured by manufacturing methods shown below, and analysis and verification were performed.

### (Example: Manufacturing Method)

### <Making of Cathode Gas Diffusion Layer>

Carbon paper (manufactured by Toray Industries Inc.: TGP-H-060), which was the substrate of a cathode gas diffusion layer, was prepared, and the carbon paper was immersed in an FEP dispersion so as to provide carbon paper:FEP (tetrafluoroethylene-hexafluoropropylene copolymer) = 95:5 (for a cathode) and 60:40 (for an anode) in weight ratio, then dried at 60°C for 1 hour, and then subjected to heat treatment (FEP water repellent treatment) at 380°C for 15 minutes. Thus, the carbon paper was substantially uniformly water-repellent-treated.

Vulcan XC-72R (manufactured by CABOT), terpineol (manufactured by KISHIDA CHEMICAL Co., Ltd.) as a solvent, and Triton (manufactured by KISHIDA CHEMICAL Co., Ltd.), which was a nonionic surfactant, were uniformly mixed by a universal mixer (manufactured by DALTON) at room temperature for 60 minutes so that the weight ratio was Vulcan XC-72R:terpineol:Triton = 20:150:3, to make a carbon paste.

A low molecular fluororesin (manufactured by Daikin: LUBRON LDW410) and a polymer fluororesin (manufactured by DuPont: PTFE-31JR) were mixed so that the weight ratio of the fluororesins contained in a dispersion was the low molecular fluororesin:the polymer fluororesin = 20:3, to make a mixed fluororesin for a cathode. The above carbon paste was introduced into a hybrid mixer container, and cooled until the carbon paste reached 10 to 12°C. The above mixed fluororesin for a cathode was introduced into the cooled carbon paste so that the weight ratio was the carbon paste:the mixed fluororesin for a cathode (the fluororesin components contained in the dispersion) = 31:1, and they were mixed in the mixing mode of a hybrid mixer (manufactured by KEYENCE: EC500) for 12 to 18 minutes. The timing of the stop of the mixing was until the temperature of the paste reached 50 to 55°C, and the mixing time was appropriately adjusted. After the temperature of the paste reached 50 to 55°C, the hybrid mixer was switched from the mixing mode to the defoaming mode to perform defoaming for 1 to 3 minutes. The paste in which the defoaming was completed was naturally cooled to make a gas diffusion layer paste for a cathode.

The gas diffusion layer paste for a cathode cooled to room temperature was applied to a surface of the above carbon paper subjected to FEP water repellent treatment so that the applied state in the carbon paper surface was uniform. For the application of the gas diffusion layer paste for a cathode, the paste application apparatus 100 shown in Figure 4 was used. In this Example, a roll coater application apparatus (manufactured by FURNACE Co., Ltd.) was used as the roll coater application portions 102A and 102B. The viscosity of the paste PS was 50000 mPa·s, and the thickness d₁ of the gas diffusion substrate CP = 190 µm was provided. In the first roll coater application portion 102A, the size d₅ of the gap between the application roll 110 and the removal portion 125 = 80 µm, the angle A = 30°, and the angle B = 90° were set. In the second roll coater application portion 102B, the size d₅ of the gap between the application roll 110 and the removal portion 125 = 100 µm, the angle A = 30°, and the angle B = 90° were set. In the surface finishing portion 103, the angle θ between the squeegee 104 and the conveyance portion 101 = 155° was set. Drying was performed by a hot air dryer (manufactured by Thermal co., Ltd.) at 60°C for 60 minutes. Finally, heat treatment was performed at 360°C for 2 hours to complete a cathode gas diffusion layer.

### <Cathode Catalyst Slurry Making>

Platinum-supporting carbon (TEC36F52, TANAKA KIKINZOKU KOGYO K.K.) was used as a cathode catalyst, and an SS700C solution (20%, Ew = 780, water content = 36 wt% (25°C), the ionomer solution Aciplex (registered trademark) SS700C manufactured by Asahi Kasei Chemicals Corporation, hereinafter abbreviated as SS700) was used as an ion conductor. 10 mL of ultrapure water was added to 5 g of the platinum-supporting carbon, and the mixture was stirred, and then, 15 mL of ethanol was added. For this catalyst dispersion solution, ultrasonic stirring and dispersion was performed for 1 hour using an ultrasonic stirrer. The predetermined SS700 solution was diluted with an equal amount of ultrapure water, and the diluted solution was stirred by a glass rod for 3 minutes. After this, ultrasonic dispersion was performed for 1 hour using an ultrasonic cleaner to obtain an SS700 aqueous solution. Then, the SS700 aqueous solution was slowly dropped into the catalyst dispersion. During the dropping, stirring was continuously performed using the ultrasonic stirrer. After the completion of the dropping of the SS700 aqueous solution, 10 g of a mixed solution of 1-propanol and 1-butanol (weight ratio 1:1) was dropped, and the obtained solution was provided as a catalyst slurry. During the mixing, all were adjusted so that the water temperature was about 60°C, and the ethanol was evaporated and removed.

### <Making of Cathode>

The catalyst slurry for a cathode made by the above method was applied to the cathode gas diffusion layer by screen printing (150 mesh), and drying at 80°C for 3 hours and heat treatment at 180°C for 45 minutes were performed.

### <Making of Anode Gas Diffusion Layer>

Carbon paper (manufactured by Toray Industries Inc.: TGP-H-060), which was the substrate of an anode gas diffusion layer, was prepared, and subjected to water repellent treatment as for the anode gas diffusion layer.

Vulcan XC-72R (manufactured by CABOT), terpineol (manufactured by KISHIDA CHEMICAL Co., Ltd.) as a solvent, and Triton (manufactured by KISHIDA CHEMICAL Co., Ltd.), which was a nonionic surfactant, were uniformly mixed by a universal mixer (manufactured by DALTON) at room temperature for 60 minutes so that the weight ratio was Vulcan XC-72R:terpineol:Triton = 20:150:3, to make a carbon paste.

The above carbon paste and the above low molecular fluororesin were introduced into a hybrid mixer container so that the weight ratio was the carbon paste:the low molecular fluororesin (hereinafter referred to as a fluororesin for an anode) (the fluororesin component contained in a dispersion) = 26:3, and they were mixed in the mixing mode of a hybrid mixer for 15 minutes. After the mixing, the hybrid mixer was switched from the mixing mode to the defoaming mode to perform defoaming for 4 minutes. When a supernatant liquid collected in the upper portion of the paste in which the defoaming was completed, this supernatant liquid was discarded, and the paste was naturally cooled to complete a gas diffusion layer paste for an anode.

The gas diffusion layer paste for an anode cooled to room temperature was applied to a surface of the above carbon paper subjected to FEP water repellent treatment so that the applied state in the carbon paper surface was uniform. For the application of the gas diffusion layer paste for an anode, the paste application apparatus 100 shown in Figure 4 was used. In this Example, a roll coater application apparatus (manufactured by FURNACE Co., Ltd.) was used as the roll coater application portions 102A and 102B. The viscosity of the paste PS was 30000 mPa·s, and the thickness d₁ of the gas diffusion substrate CP = 190 µm was provided. In the first roll coater application portion 102A, the size d₅ of the gap between the application roll 110 and the removal portion 125 = 100 µm, the angle A = 30°, and the angle B = 90° were set. In the second roll coater application portion 102B, the size d₅ of the gap between the application roll 110 and the removal portion 125 = 120 µm, the angle A = 30°, and the angle B = 90° were set. In the surface finishing portion 103, the angle 8 between the squeegee 104 and the conveyance portion 101 = 155° was set. Drying was performed by a hot air dryer (manufactured by Thermal co., Ltd.) at 60°C for 60 minutes. Finally, heat treatment was performed at 360°C for 2 hours to complete an anode gas diffusion layer.

### <Making of Catalyst Slurry for Anode>

The method for making a catalyst slurry for an anode was similar to the method for making a catalyst slurry for a cathode except that platinum ruthenium (PtRu)-supporting carbon (TEC61E54, TANAKA KIKINZOKU KOGYO K.K.) was used as a catalyst.

### <Making of Anode>

The catalyst slurry for a anode made by the above method was applied to the anode gas diffusion layer by screen printing (150 mesh), and drying at 80°C for 3 hours and heat treatment at 180°C for 45 minutes were performed.

### <Making of Membrane Electrode Assembly>

Hot pressing was performed in a state in which a solid polymer electrolyte membrane having a film thickness of 50 µm was sandwiched between the anode and the cathode made by the above methods. As the solid polymer electrolyte membrane, Aciplex (registered trademark) (SF7202, manufactured by Asahi Kasei E-materials Corp.) was used. The anode, the solid polymer electrolyte membrane, and the cathode were hot pressed under the bonding conditions of 170°C and 200 seconds to make a membrane electrode assembly according to the Example.

### (Comparative Example: Manufacturing Method)

The manufacturing method according to the Comparative Example was similar to the manufacturing method according to the Example except that in the making of a cathode gas diffusion layer and the making of an anode gas diffusion layer, a doctor bar shown in Figure 7 (a) was used as the doctor bar used in the first roll coater application portion 102A and the second roll coater application portion 102B. The size d₆ of the portion protruding from the virtual line L1 = 10 mm was set.

### (Analysis of Microporous Layer)

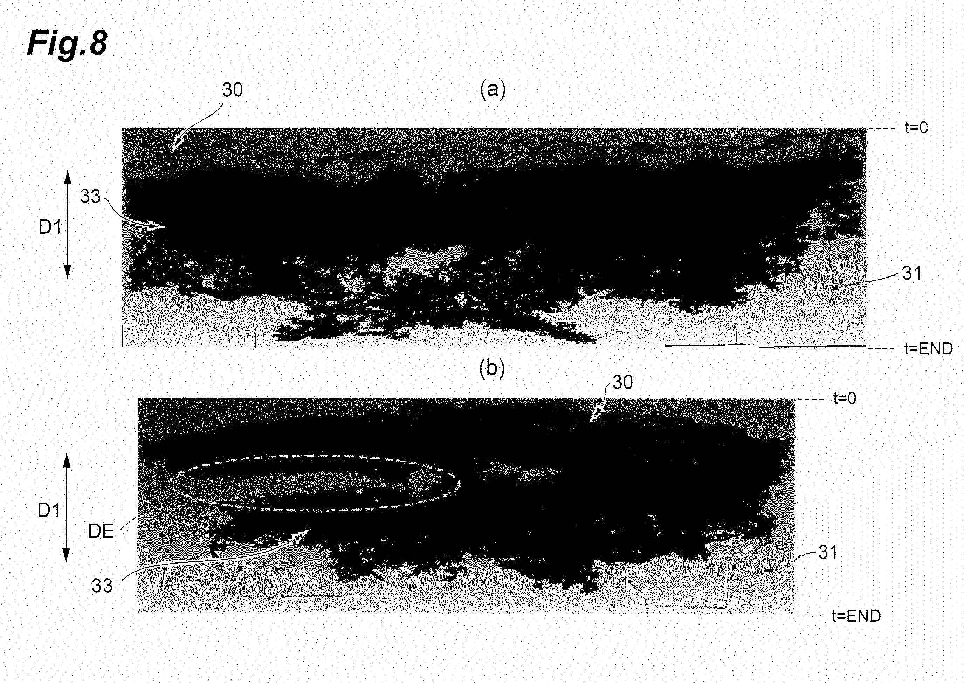

The made cathodes according to the Example and the Comparative Example were analyzed. For the obtaining and analysis of three-dimensional data, SMX-160CTS (manufactured by SHIMADZU CORPORATION), which was three-dimensional measurement X-ray CT, was used. The cross-sectional position t = 0 was set to a position on the solid polymer electrolyte membrane side of the catalyst layer 30, and the cross-sectional position t = END was set to a position on the gas flow path side of the gas diffusion layer 32, and the three-dimensional data of the internal structure over the range of 300 µm was obtained. Figure 8 shows images showing the catalyst layer 30 and the microporous layer 33 present in the cathode 24. Figure 8 (a) is an image according to the Example, and Figure 8 (b) is an image according to the Comparative Example. The images are made based on the three-dimensional data, and are internal images in which the cathode 24 is viewed from the direction orthogonal to the thickness direction D1 (viewed from a viewpoint VP in Figure 3). The images of Figure 8 do not show only the catalyst layer 30 and the microporous layer 33 present on one cross section obtained by cutting one predetermined portion when they are viewed from the viewpoint VP, and show the whole of the catalyst layer 30 and the microporous layer 33 three-dimensionally present in the depth direction as viewed from the viewpoint VP by putting together on a two-dimensional image.

As understood from Figure 8 (b), in the cathode 24 according to the Comparative Example, a divided portion DE in which the microporous layer 33 is largely divided in the thickness direction D1 is formed. The divided portion DE is formed in generally the entire left half region in the width direction of the cathode 24. For example, when an image as shown in the cross section CSₓ in Figure 3 is obtained at a cross-sectional position corresponding to the divided portion DE, it is observed that the microporous layer 33 is not present at all in the generally left half region in the cross section CSₓ. In the divided portion DE in which a portion in which the microporous layer 33 has no continuity extends in a wide range in this manner, a discharge path for produced water is not sufficiently ensured, and water accumulation occurs. It is understood that in the Comparative Example, the paste PS in the first layer applied by the first roll coater application portion 102A is not kept smooth, and by applying the paste PS in the second layer not kept smooth on the paste PS in the first layer, air intrudes between the first layer and the second layer, and thus, such a divided portion DE is formed. On the other hand, as understood from Figure 8 (a), in the cathode 24 according to the Example, a large divided portion as in the Comparative Example is not formed, and also for observed ones, only small divided portions are formed in some ranges on the gas flow path side. In this manner, it is understood that by using the paste application apparatus 100 according to this embodiment, the good microporous layer 33 having high continuity is obtained.

Next, for the obtained three-dimensional data, cross-sectional images at cross-sectional positions were obtained from the cross-sectional position t = 0 toward the cross-sectional position t = END at a pitch of 0.8 µm. By analyzing the cross-sectional images, the presence frequency (%) of the microporous layer 33 at the cross-sectional positions was obtained. The results are shown in Figure 9. The results of the Example are shown by the graph EL1, and the results of the Comparative Example are shown by the graph EL2. In addition, presence frequency cumulative values (%) were obtained from the cross-sectional position t = 0 toward the cross-sectional position t = END. The results are shown in Figure 10. The results of the Example are shown by the graph ML1, and the results of the Comparative Example are shown by the graph ML2.

As understood from the graph EL1 in Figure 9, in the Example, the presence frequency (the amount of the microporous layer on a cross section) is maximum at the cross-sectional position t = xₘₐₓ (first cross-sectional position). In addition, the presence frequency decreases from the cross-sectional position t = xₘₐₓ toward the second surface S4 on the gas flow path side. In other words, in a region on the second surface S4 side of the cross-sectional position t = xₘₐₓ, the amount of the microporous layer 33 in a cross section reduces uniformly toward the second surface S4. Although portions in which the presence frequency increases and decreases slightly are seen locally, they are only extremely minute changes, and the presence frequency reduces uniformly when seen as the entire graph EL1. Since the presence frequency reduces uniformly in this manner, only such a smoothly increasing curve that is raised upward is drawn on the gas flow path side of the cross-sectional position t = xₘₐₓ in the graph ML1 in Figure 10. On the other hand, as understood from the graph EL2 in Figure 9, in the Comparative Example, also after the presence frequency is maximum at the local maximum point PK1, the presence frequency fluctuates largely, and the local minimum point PK2 and the local maximum point PK3 are formed because the divided portion DE is formed. It is understood that the difference in value between the local minimum point PK2 and the local maximum point PK3 is large, and the presence frequency does not reduce uniformly. Because there is no uniform reduction in this manner, in the graph ML2 in Figure 10, the presence frequency cumulative value does not increase smoothly, and such a curve portion EP that is raised downward is formed.

The central position of the gas diffusion substrate 31 in the thickness direction D1 is a position shown by the cross-sectional position = 150 µm. As is clear from the values of the graph ML1 in Figure 10, in the Example, the presence frequency cumulative value at the central position is 80% or more. In other words, it is understood that in the Example, the amount of the microporous layer 33 included in a region on the catalyst layer 30 side of the central position of the gas diffusion substrate 31 is 80% or more of the amount of the entire microporous layer 33 in the cathode 24. On the other hand, as is clear from the values of the graph ML2 in Figure 10, in the Comparative Example, the presence frequency cumulative value at the central position is less than 80%. In other words, it is understood that in the Comparative Example, the amount of the microporous layer 33 included in a region on the catalyst layer 30 side of the central position of the gas diffusion substrate 31 is less than 80% of the amount of the entire microporous layer 33 in the cathode 24.

In addition, it was confirmed by three-dimensional data analysis and the observation of appearance that in the Example, the microporous layer 33 extended to the second surface S4 of the gas diffusion substrate 31. In other words, it is understood that a discharge path having high continuity is ensured from the first surface S2 to the second surface S4 of the gas diffusion substrate 31. Also in the Comparative Example, the microporous layer 33 extended to the second surface S4, but as described above, the large divided portion DE is formed in the gas diffusion substrate 31, and high continuity from the first surface S2 to the second surface S4 is not ensured.

### (Single Cell Performance Test)

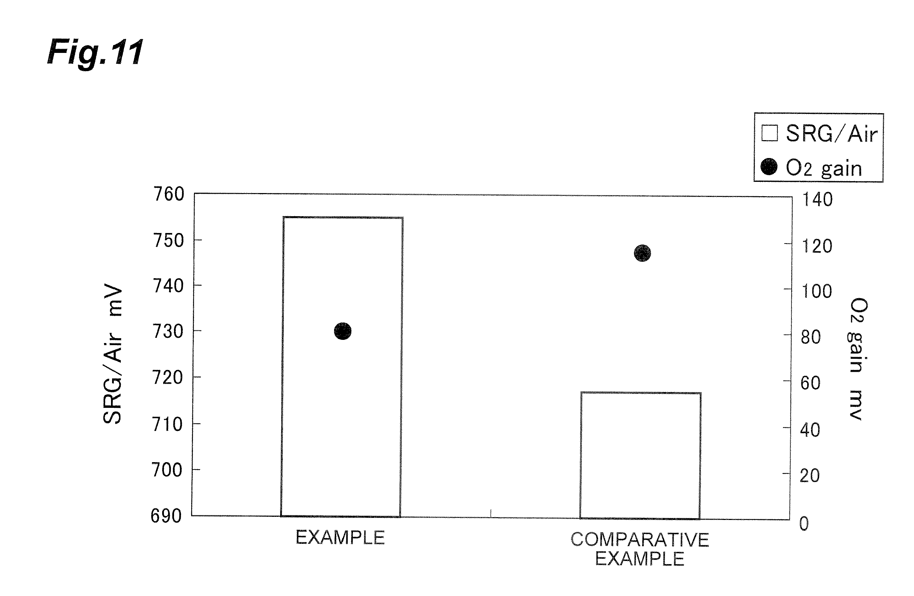

In addition, using the membrane electrode assemblies of the Example and the Comparative Example, cell voltage was measured. The measurement conditions are as follows. The cell voltage measurement results are shown in "SRG/Air" in Figure 11. In addition, in order to verify the water discharge performance of the cathode, oxygen gain was measured. The oxygen gain is the difference between cell voltage when the cathode gas is air and cell voltage when the cathode gas is oxygen, and the higher the water discharge properties of the cathode are, the smaller the value of the oxygen gain is. The oxygen gain measurement results are shown in "O₂ gain" in Figure 11.
Anode gas: reformed hydrogen gas (CO concentration 10 ppm) Cathode gas: air
Cell temperature: 70°C
Cathode gas humidification temperature: 70°C
Anode gas humidification temperature: 70°C
Current density: 0.3 A/cm²

As shown in Figure 11, the Example shows a lower oxygen gain than the Comparative Example, and from this, it is understood that the Example is excellent in produced water discharge characteristics. In addition, the cell voltage is also higher in the Example than in the Comparative Example. From this, it is understood that the Example can exhibit high cell performance. From the above, it is understood that the membrane electrode assembly according to the Example can achieve both water discharge properties and gas diffusivity as a fuel cell and improve voltage characteristics. In addition, it is understood that by using the paste application apparatus 100, it is possible to improve the application performance of the paste and improve the cell performance of the fuel cell.

The present invention is not limited to the above-described embodiments, and modifications, such as various design changes, can also be made based on the knowledge of those skilled in the art, and embodiments in which such modifications are made can also be included within the scope of the present invention.

In the above-described manufacturing method, a sheet article is used as the substrate, but a continuous substrate (which is a long substrate, and is cut into the desired size after the paste is applied) may be used. In addition, when a continuous substrate is used, the configuration of the conveyance portion may be changed. In other words, instead of the conveyance portion of a type in which a substrate is placed on a conveyor and moved, as shown in Figure 4, a conveyance portion of a type in which a continuous substrate is placed between rolls, and the substrate is fed in the conveyance direction by the rotation of the rolls may be used. Further, in the above-described manufacturing method, a catalyst layer is formed on a gas diffusion layer, and an electrolyte membrane is bonded to the electrode (CCS method), but it is possible to form a catalyst layer on an electrolyte membrane and then bond a gas diffusion layer (CCM method).

### Industrial Applicability

The present invention can be used for a gas diffusion layer, a fuel cell electrode, a membrane electrode assembly, and a fuel cell.

### Reference Signs List

10 ... fuel cell, 20 ... solid polymer electrolyte membrane, 22 ... anode (fuel cell electrode), 24 ... cathode (fuel cell electrode), 26, 30 ... catalyst layer, 27, 31 ... gas diffusion substrate, 28, 32 ... gas diffusion layer, 29, 33 ... microporous layer, 50 ... membrane electrode assembly, 100 ... paste application apparatus, 101 ... conveyance portion, 102A ... first roll coater application portion, 102B ... second roll coater application portion, 110 ... application roll, 110a ... surface, 120 ... doctor bar, 121 ... removal surface, 122 ... folded-back surface, 123 ... edge portion, 125 ... removal portion, P1 ... nearest point, L1 ... virtual line.

## Claims

1. A gas diffusion layer comprising:
a gas diffusion substrate having a first surface and a second surface formed opposite to the first surface; and
a microporous layer containing a conductive powder and disposed on the first surface of the gas diffusion substrate and in the gas diffusion substrate, wherein
the microporous layer is continuous in a thickness direction of the gas diffusion substrate,
an amount of the microporous layer on a cross section perpendicular to the thickness direction is maximum at a first cross-sectional position in the thickness direction and decreases from the first cross-sectional position toward the second surface,
an amount of the microporous layer included in a region on the first surface side of a central position of the gas diffusion substrate in the thickness direction is 80% or more of an amount of the entire microporous layer, and
the microporous layer extends to the second surface.

2. The gas diffusion layer according to claim 1, wherein a curve obtained by plotting the amount of the microporous layer on the cross section with respect to a cross-sectional position of the cross section in the thickness direction has no local minimum point between the first cross-sectional position and the second surface.

3. The gas diffusion layer according to claim 1, wherein when a curve obtained by plotting the amount of the microporous layer on the cross section with respect to a cross-sectional position of the cross section in the thickness direction has a local minimum point between the first cross-sectional position and the second surface,
a difference between a maximum value on the second surface side of the local minimum point and a value at the local minimum point is 5% or less of a value at the first cross-sectional position.

4. The gas diffusion layer according to any one of claims 1 to 3, wherein the curve obtained by plotting the amount of the microporous layer on the cross section with respect to the cross-sectional position of the cross section in the thickness direction has no local minimum point on the first surface side of the first cross-sectional position.

5. A fuel cell electrode comprising:
the gas diffusion layer according to any one of claims 1 to 4; and
a catalyst layer.

6. A membrane electrode assembly comprising:
an electrolyte membrane;
an anode provided on one surface of the electrolyte membrane; and
a cathode provided on the other surface of the electrolyte membrane, wherein
the gas diffusion layer according to any one of claims 1 to 4 is used in at least one of the anode and the cathode.

7. A fuel cell comprising the gas diffusion layer according to any one of claims 1 to 4.
